Europäisches Patentamt

European Patent Office

Office européen des brevets

(19)

(11) Numéro de publication: **0 322 328**
**A1**

(12) # DEMANDE DE BREVET EUROPEEN

(21) Numéro de dépôt: **88440109.2**

(22) Date de dépôt: **22.12.88**

(51) Int. Cl.⁴: **B 62 D 53/06**
B 60 P 1/64, B 62 D 53/08

(30) Priorité: **23.12.87 FR 8718498**

(43) Date de publication de la demande:
**28.06.89  Bulletin  89/26**

(84) Etats contractants désignés:
**AT BE CH DE ES FR GB GR IT LI LU NL SE**

(71) Demandeur: **Diebolt, Rémy**
**20, rue du 22 Novembre**
**F-67440 Marmoutier  (FR)**

(72) Inventeur: **Diebolt, Rémy**
**20, rue du 22 Novembre**
**F-67440 Marmoutier  (FR)**

(74) Mandataire: **Nuss, Pierre et al**
**10, rue Jacques Kablé**
**F-67000 Strasbourg  (FR)**

(54) **Dispositif de prolongement avant pour semi-remorque du type à plateau ou porte-conteneurs.**

(57)  La présente invention concerne un dispositif de prolongement avant pour semi-remorque du type à plateau ou
porte-conteneurs.
   Dispositif caractérisé en ce qu'il est essentiellement constitué par un cadre (1) monté à l'avant du col de cygne (2) de
manière pivotable en position verticale et verrouillable en
position horizontale de service, ce cadre étant pourvu d'un
pivot d'attelage (3) identique à celui (4) équipant le col de cygne
(2).

Fig.1

EP 0 322 328 A1

## Description

### Dispositif de prolongement avant pour semi-remorque du type à plateau ou porte-conteneurs

La présente invention concerne le domaine des véhicules de transport poids lourds, en particulier des semi-remorques, et a pour objet un dispositif de prolongement avant pour semi-remorque du type à plateau ou porte-conteneurs.

Les semi-remorques, qui comportent généralement un châssis reposant, à l'arrière, sur un essieu simple, double ou triple et pourvu, à l'avant, d'un col de cygne de liaison à un tracteur, ne permettent pas une adaptation à la longueur en fonction d'un chargement donné. Ainsi, dans le cas d'utilisation d'une semi-remorque longue pour le transport de charges lourdes et courtes, il subsiste une longueur relativement importante inusitée. Cette longueur résiduelle présente l'inconvénient d'obérer la maniabilité de l'ensemble de l'attelage tracteur et semi-remorque ainsi réalisé. Un inconvénient identique apparaît dans le cas de transport de conteneurs, pour lesquels sont généralement prévues des semi-remorques longues afin de permettre le chargement de conteneurs du plus grand module, le chargement de conteneurs de module plus faible entraînant également une inutilisation partielle de la longueur de chargement du châssis. En outre, un chargement incomplet d'une telle semi-remorque peut également entraîner des risques de mauvaise répartition de la charge, notamment par rapport au col de cygne.

La présente invention a pour but de pallier ces inconvénients.

Elle a, en effet, pour objet un dispositif de prolongement avant pour semi-remorque du type à plateau ou porte-conteneurs, caractérisé en ce qu'il est essentiellement constitué par un cadre monté à l'avant du col de cygne de manière pivotable en position verticale et verrouillable en position horizontale de service, ce cadre étant pourvu d'un pivot d'attelage identique à celui équipant le col de cygne.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue en élévation latérale, partielle d'une semi-remorque équipée du dispositif conforme à l'invention ;

la figure 2 est une vue partielle en plan, à plus grande échelle, du dispositif ;

la figure 3 est une vue en élévation latérale et en coupe correspondant à la figure 2 ;

la figure 4 est une vue partielle en élévation latérale du dispositif pivoté en position verticale, et

la figure 5 est une vue en plan correspondant à la figure 4.

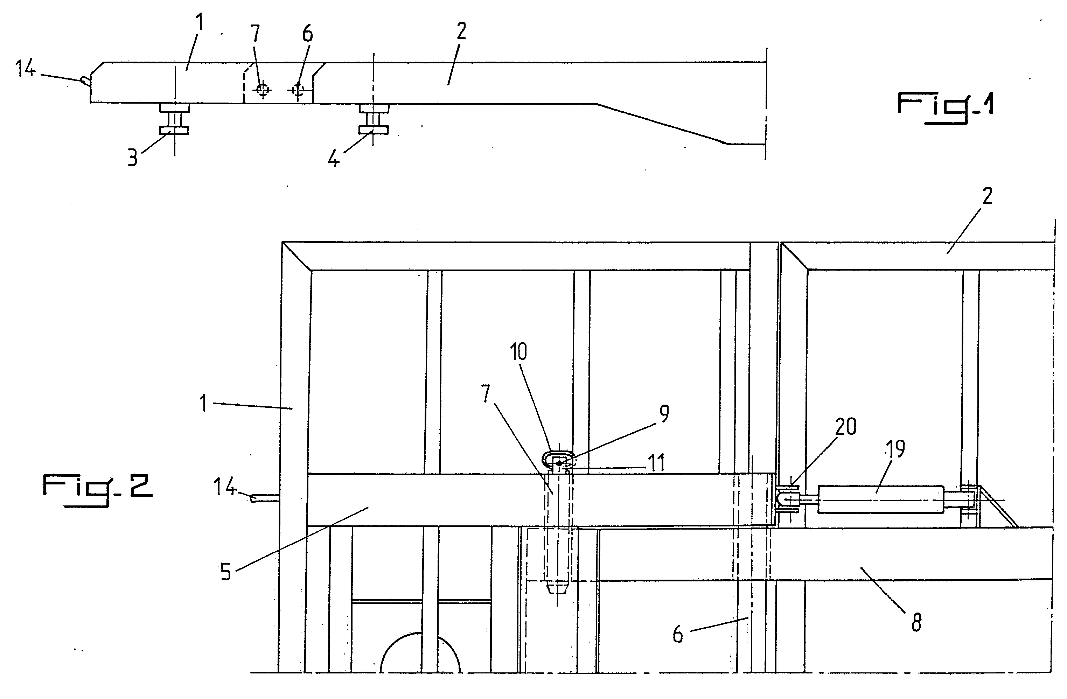

Conformément à l'invention, et comme le montrent plus particulièrement, à titre d'exemple, les figures 1 à 5 des dessins annexés, le dispositif de prolongement avant pour semi-remorque du type à plateau ou porte-conteneurs, est essentiellement constitué par un cadre 1 monté à l'avant du col de cygne 2 de manière pivotable en position verticale et verrouillable en position horizontale de service. Ce cadre 1 est pourvu d'un pivot d'attelage 3 qui est identique à celui,4, équipant le col de cygne 2.

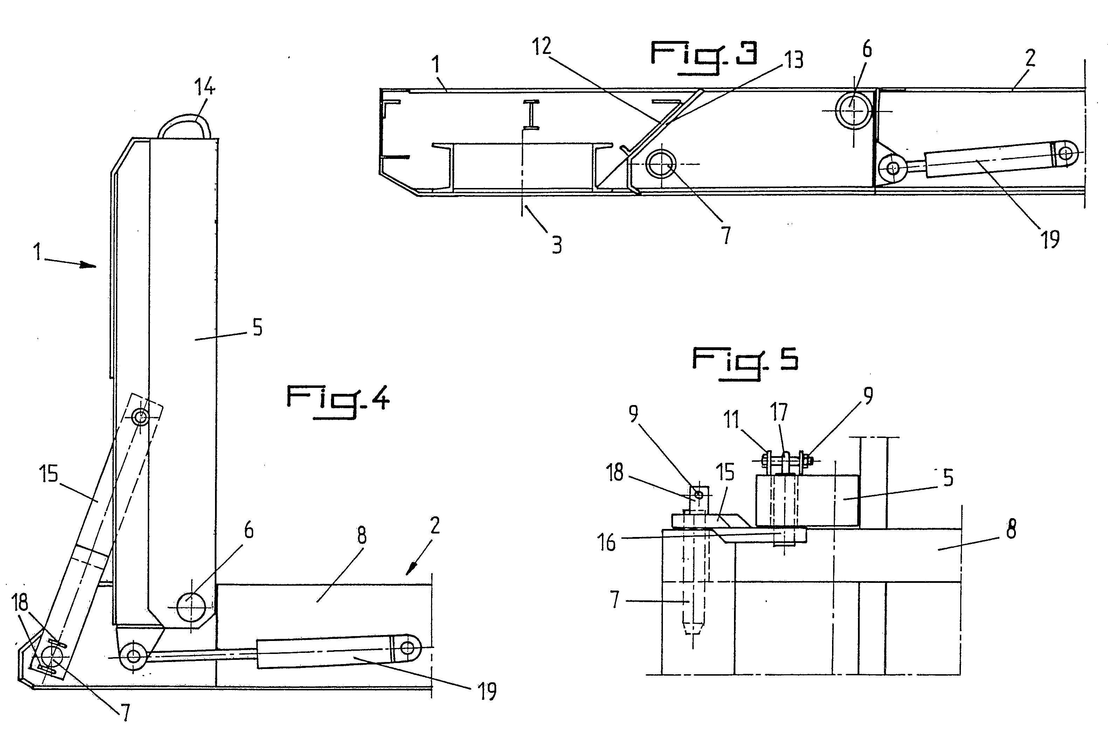

Le cadre 1, qui présente, en plan, une forme de U, est monté sur le col de cygne 2, à l'extrémité des ailes du U, au moyen de deux longerons 5 coopérant avec un arbre 6 traversant deux longerons 8 du châssis de la semi-remorque, en saillie à l'avant du col de cygne 2, et est verrouillé en position horizontale de service, au moyen de broches 7 traversant les longerons 5, se fichant dans les longerons 8 et maintenues en position de verrouillage chacune au moyen d'un boulon 9 traversant une anse 10 desdites broches 7 et serré sur des pattes 11 solidaires des longerons 5 et s'étendant de part et d'autre du trou de passage desdites broches 7 (figures 2 et 3).

Dans sa partie centrale correspondant à l'âme du U, le cadre 1 présente une traverse inclinée 12 s'appuyant sur une traverse 13, inclinée de manière correspondante, reliant les extrémités des longerons 8 (figure 3). Ainsi, il est possible de réaliser automatiquement un positionnement à l'horizontale du cadre 1 par rapport au col de cygne 2 et d'éviter tout pivotement supplémentaire dudit cadre 1. Les broches 7 qui réalisent le verrouillage du cadre 1 en position horizontale sont elles-mêmes verrouillées en position grâce au boulon 9 traversant leur anse 10, de sorte qu'un déverrouillage accidentel est impossible.

A son extrémité avant, le cadre 1 est avantageusement muni d'au moins un anneau 14 permettant sa manutention en vue de son mouvement de pivotement, hors de sa position de service ou dans sa position de service,au moyen d'une grue ou d'une potence ou d'un dispositif portable de traction connu en soi, le maintien en position verticale de pivotement étant assuré au moyen d'au moins un bras coudé 15 muni à une extrémité d'un tourillon 16 pénétrant, par le côté interne, dans le trou de passage de la broche 7 prévu sur le longeron 5 correspondant et verrouillé en position par l'intermédiaire d'une anse 17 coopérant avec un boulon 9 serré sur les pattes 11 dudit longeron 5, l'autre extrémité du bras 15 présentant un trou de passage pour la broche 7, ce trou étant entouré de deux pattes 18 de fixation du boulon 9 de verrouillage de ladite broche 7.

Dans le mode de réalisation décrit ci-dessus, le mouvement de pivotement du cadre 1 est réalisé mécaniquement au moyen de dispositifs extérieurs tels que grues ou potences ou d'un dispositif portable rapporté. Cependant, ce mouvement de pivotement peut également être réalisé, conformément à une autre caractéristique de l'invention, et comme le montre les figures 2 et 4, au moyen de deux vérins 19 fixés, d'une part, sur les longerons 8 du châssis de la semi-remorque et dont la tête de piston s'appuie, d'autre part, sur une chape 20 solidaire de l'extrémité des longerons 5, de manière à réaliser un moment de pivotement. Un tel mode de réalisation permet d'effectuer le pivotement du cadre 1 sans nécessiter de dispositifs annexes de manoeuvre.

Selon une variante de réalisation de l'invention, non représentée aux dessins annexés, le cadre 1 monté à l'avant du col de cygne 2 peut avantageusement être pourvu d'un cadre télescopique supplémentaire muni d'un pivot d'attelage et coulissant dans ledit cadre 1, de préférence dans ses longerons 5. Ainsi, le dispositif de prolongement peut encore être allongé davantage et permettre la réalisation d'une semi-remorque de grande longueur en position de service et d'un encombrement en longueur réduit à vide.

Grâce à l'invention, il est possible de réaliser des semi-remorques dont la longueur de chargement peut être allongée ou raccourcie en fonction des besoins.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Dispositif de prolongement avant pour semi-remorque du type à plateau ou porte-conteneurs caractérisé en ce qu'il est essentiellement constitué par un cadre (1) monté à l'avant du col de cygne (2) de manière pivotable en position verticale et verrouillable en position horizontale de service, ce cadre étant pourvu d'un pivot d'attelage (3) identique à celui (4) équipant le col de cygne (2).

2. Dispositif, suivant la revendication 1, caractérisé en ce que le cadre (1), qui présente, en plan, une forme de U, est monté sur le col de cygne (2), à l'extrémité des ailes du U, au moyen de deux longerons (5) coopérant avec un arbre (6) traversant deux longerons (8) du châssis de la semi-remorque, en saillie à l'avant du col de cygne (2), et est verrouillé en position horizontale de service, au moyen de broches (7) traversant les longerons (5), se fichant dans les longerons (8) et maintenues en position de verrouillage chacune au moyen d'un boulon (9) traversant une anse (10) desdites broches (7) et serré sur des pattes (11) solidaires des longerons (5) et s'étendant de part et d'autre du trou de passage desdites broches (7).

3. Dispositif, suivant l'une quelconque des revendications 1 et 2, caractérisé en ce que, dans sa partie centrale correspondant à l'âme du U, le cadre (1) présente une traverse inclinée (12) s'appuyant sur une traverse (13), inclinée de manière correspondante, reliant les extrémités des longerons (8).

4. Dispositif, suivant l'une quelconque des revendications 1 à 3, caractérisé en ce qu'à son extrémité avant, le cadre (1) est avantageusement muni d'au moins un anneau (14) permettant sa manutention en vue de son mouvement de pivotement, hors de sa position de service ou dans sa position de service, au moyen d'une grue ou d'une potence ou d'un dispositif portable de traction connu en soi, le maintien en position verticale de pivotement étant assuré au moyen d'au moins un bras coudé (15) muni à une extrémité d'un tourillon (16) pénétrant, par le côté interne, dans le trou de passage de la broche (7) prévu sur le longeron (5) correspondant et verrouillé en position par l'intermédiaire d'une anse (17) coopérant avec un boulon (9) serré sur les pattes (11) dudit longeron (5), l'autre extrémité du bras (15) présentant un trou de passage pour la broche (7), ce trou étant entouré de deux pattes (18) de fixation du boulon (9) de verrouillage de ladite broche (7).

5. Dispositif, suivant la revendication 1, caractérisé en ce que le mouvement de pivotement du cadre (1) est réalisé au moyen de deux vérins (19) fixés, d'une part, sur les longerons (8) du châssis de la semi-remorque et dont la tête de piston s'appuie, d'autre part, sur une chape (20) solidaire de l'extrémité des longerons (5), de manière à réaliser un moment de pivotement.

6. Dispositif, suivant l'une quelconque des revendications 1 à 5, caractérisé en ce que le cadre (1) est avantageusement pourvu d'un cadre télescopique supplémentaire muni d'un pivot d'attelage et coulissant dans ledit cadre (1), de préférence dans ses longerons (5).

Fig.-1

Fig.-2

EP 0 322 328 A1

Fig. 3

Fig. 4

Fig. 5

EP 0 322 328 A1

Office européen
des brevets

**RAPPORT DE RECHERCHE EUROPEENNE**

Numero de la demande

EP 88 44 0109

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 302 022  (SCHOFFLER et al.)<br>* En entier * | 1 | B 62 D  53/06<br>B 60 P   1/64<br>B 62 D  53/08 |
| A | --- | 2,5 | |
| Y | EP-A-0 094 701  (AGAM)<br>* Résumé; figures 1-4; revendications 1,3,5,6 * | 1 | |
| A | --- | 3 | |
| A | FR-A-2 264 705  (BENALU)<br>* En entier * | 1 | |
| A | US-A-3 102 738  (DE ROSHIA)<br>* Revendication 1; figures 1,4,5,6 * | 1 | |
| A | DE-A-2 829 420  (FICKERS)<br>* Revendication 1; figures 1,3 * | 1 | |
| A | DE-A-3 438 679  (LOCH)<br>* Colonne 4, ligne 61 - colonne 5; figure 1 *<br>----- | 1 | |

**DOMAINES TECHNIQUES RECHERCHES (Int. Cl.4)**

B 60 P
B 62 D

**Le présent rapport a été établi pour toutes les revendications**

| Lieu de la recherche | Date d'achèvement de la recherche | Examinateur |
|---|---|---|
| LA HAYE | 15-02-1989 | SCHMAL R. |